# EUROPÄISCHE PATENTSCHRIFT

(11) **EP 3 424 109 B1**
(45) Veröffentlichungstag und Bekanntmachung des Hinweises auf die Patenterteilung: **21.04.2021**
(21) Anmeldenummer: 17700038.7
(22) Anmeldetag: 03.01.2017
(51) Int. Cl.: H01R 13/426, F16L 3/223, H01R 13/00, H01R 9/24, H01R 13/514, H01R 13/41

(54) **MODULSYSTEM FÜR MODULARE STECKVERBINDER**
MODULE SYSTEM FOR MODULAR PLUG CONNECTORS
SYSTÈME DE MODULES POUR DES CONNECTEURS ENFICHABLES MODULAIRES

(30) Priorität: 03.03.2016 DE 102016203483
(43) Veröffentlichungstag der Anmeldung: 09.01.2019
(73) Patentinhaber: Harting Electric GmbH & Co. KG, 32339 Espelkamp (DE)
(72) Erfinder: FERDERER, Albert, 32339 Espelkamp (DE); MEIER, Heiko, 32425 Minden (DE)
(74) Vertreter: Eisenführ Speiser
(86) Internationale Anmeldenummer: PCT/EP2017/050051
(87) Internationale Veröffentlichungsnummer: WO 2017/148598

(56) Entgegenhaltungen:
- EP-A2- 1 180 817
- EP-A2- 1 180 817
- EP-A2- 2 390 960
- US-A1- 2010 029 143
- US-A1- 2010 029 143
- US-B2- 8 029 325
- US-B2- 8 029 325

## Beschreibung

Die vorliegende Erfindung betrifft das Gebiet von modularen Steckverbindern und insbesondere eine Konstellation, bei der in einem modularen Steckverbinder Kontakte unterschiedlicher Art kombiniert werden.

Ein modularer Steckverbinder ist beispielsweise in der EP 1 353 412 A2 beschrieben, der zum Beispiel einen Halterahmen zur Halterung von Steckerverbindermodulen nutzen kann, wie er in DE 197 07 120 C1 beschrieben ist.

Schon in der EP 1 353 412 A2 wird beschrieben, dass in einem modularen Steckverbinder Module unterschiedlicher Art kombiniert werden können, beispielsweise zur Weiterleitung elektrischer, optischer und/oder pneumatischer Signale.

Bekannte Module bzw. Modulblöcke sind jeweils auf eine vorgegebene Art von Kontakten ausgelegt. Es ist hierbei aus konstruktiven und funktionellen Gründen so, dass etwa ein Pneumatik-Kontakt größer (sowohl in der Länge als auch vor allem im Querschnitt) dimensioniert ist, als beispielsweise ein typischer elektrischer Kontakt.

Dies hat zur Folge, dass in einem Modulblock, der für entweder elektrische Kontakte oder pneumatische Kontakte ausgelegt ist, im Stand der Technik eben entweder nur solche elektrischen Kontakte oder nur pneumatische Kontakte Verwendung können. Die im Querschnitt größeren Pneumatik-Kontakte sind schlicht zu groß für einen Modulblock, der für elektrische Kontakte vorgesehen ist, während die elektrischen Kontakte zu klein sind, um in einem Modulblock eingesetzt werden zu können, der eigentlich für pneumatische Kontakte ausgelegt ist.

Soweit in einem Steckverbinder ausreichend Platz vorhanden ist, um jeweils separate Modulblöcke z.B. für elektrische und pneumatische Kontakte vorzusehen, können die Kontakte jeweils in den unterschiedlichen Modulblöcken aufgenommen werden. Hierbei verbleiben allerdings oft ungenutzte Plätze für Kontakte, was insbesondere dann zu einem Problem wird, wenn der Platz in einem Steckverbinder knapp wird, also eine größere Anzahl Kontakte miteinander kombiniert werden.

Ein der vorliegenden Erfindung zugrundeliegendes Ziel ist es, diese Beschränkung aus dem Stand der Technik zu überwinden und insofern eine Lösung vorzustellen, bei der eine Kombination von Kontakten unterschiedlicher Art in platzsparender Weise möglich ist.

Erfindungsgemäß wird nach einem ersten Aspekt ein Modulsystem für einen modularen Steckverbinder vorgeschlagen, wie es in Anspruch 1 definiert ist, nämlich mit einem Modulblock zur Aufnahme in dem modularen Steckverbinder, wobei der Modulblock mit mehreren Kontaktaufnahmen ausgestaltet ist, die jeweils für eine Aufnahme eines Kontakts einer ersten Art vorgesehen sind, und einem Anpassungsbauteil, das dazu ausgestaltet ist, in einer Kontaktaufnahme des Modulblocks aufgenommen zu werden, wobei das Anpassungsbauteil für eine Aufnahme eines Kontakts einer zweiten Art vorgesehen ist, wobei der Kontakt der zweiten Art einen kleineren Querschnitt als der Kontakt der ersten Art aufweist.

Das erfindungsgemäße Modulsystem dieses ersten Aspekts lässt sich auch als ein Modulsystem mit einem Modulblock zur Aufnahme in einem modularen Steckverbinder und einem Anpassungsbauteil zur Aufnahme in dem Modulblock beschreiben, wobei der Modulblock mehrere Kontaktaufnahmen aufweist. Das Anpassungsbauteil ist zu einer Aufnahme in einer Kontaktaufnahme ausgestaltet, wobei die Kontaktaufnahmen jeweils einen ersten Querschnitt aufweisen und wahlweise zur Aufnahme eines Kontakts einer ersten Art oder eines Anpassungsbauteils ausgestaltet sind. Das Anpassungsbauteil weist seinerseits eine Aufnahme für einen Kontakt einer zweiten Art auf, die einen zweiten Querschnitt besitzt. Der zweite Querschnitt ist hierbei kleiner als der erste Querschnitt.

Erfindungsgemäß wird nach einem zweiten Aspekt ein System umfassend ein Anpassungsbauteil, einen Kontakt einer ersten Art und einen Kontakt einer zweiten Art für ein Modulsystem für einen modularen Steckverbinder vorgesehen, wie es in Anspruch 6 definiert ist, wobei nämlich das Anpassungsbauteil dazu ausgestaltet ist, in einer Kontaktaufnahme eines Modulblocks des Modulsystems aufgenommen zu werden, die für eine Aufnahme des Kontakts der ersten Art vorgesehen ist, wobei das Anpassungsbauteil ferner für eine Aufnahme des Kontakts der zweiten Art vorgesehen ist und wobei der Kontakt der zweiten Art einen kleineren Querschnitt als der Kontakt der ersten Art aufweist.

Erfindungsgemäß wird nach einem weiteren Aspekt ein Verfahren zur Bereitstellung eines modularen Steckverbinders vorgeschlagen, wie es in Anspruch 8 definiert ist, nämlich mit den Schritten eines Vorsehens eines Modulblocks, wobei der Modulblock mit mehreren Kontaktaufnahmen ausgestaltet ist, die jeweils für eine Aufnahme eines Kontakts einer ersten Art vorgesehen sind, eines Einbringens eines Kontakts der ersten Art in eine der Kontaktaufnahmen des Modulblocks, eines Einbringen eines Kontakts einer zweiten Art in ein Anpassungsbauteil, wobei der Kontakt der zweiten Art einen kleineren Querschnitt als der Kontakt der ersten Art aufweist, eines Einbringens des Anpassungsbauteils in eine weitere der Kontaktaufnahmen des Modulblocks und eines Einbringens des Modulblocks in den modularen Steckverbinder.

Hierbei ist zu beachten, dass die Erfindung auf keine besondere Reihenfolge dieser Schritte beschränkt ist, soweit eine solche sich nicht aus der Natur der Schritte selbst ergibt. Vorzugsweise wird allerdings das Anpassungsbauteil mit dem Kontakt der zweiten Art bestückt, so dass das Einbringen des Anpassungsbauteil in die eine weitere der Kontaktaufnahmen mit dem in das Anpassungsbauteil eingebrachten Kontakt der zweiten Art erfolgt. Zudem wird der Modulblock vorzugsweise mit den Kontakten bestückt (direkt im Fall von Kontakten der ersten Art und indirekt im Fall von Kontakten der zweiten Art) in den Steckverbinder eingebracht.

Ein Teil des Hintergrunds der vorliegenden Erfindung findet sich in den folgenden Überlegungen.

Eine Möglichkeit, in einem Modulblock Kontakte unterschiedlicher Art vorzusehen, kann darin bestehen, abweichend von den einheitlichen Modulblöcken mit Aufnahmen für nur eine Art von Kontakt (bzw. eine Kontaktgröße) andere Modulblöcke vorzusehen, in denen bereits Aufnahmen für Kontakte unterschiedlicher Art bzw. Größe vorgesehen sind. Dieser Ansatz hat allerdings als Nachteil, dass damit eine hohe Anzahl verschiedenen Modulblöcke vorgehalten werden müsste, um die vorstellbaren Möglichkeiten von Kombinationen der verschiedenen Kontaktarten abzubilden.

Das erfindungsgemäße Modulsystem erlaubt allerdings ohne einen solchen Variationsaufwand durch eine Kombination eines (insbesondere einheitlichen) Modulblocks mit einem (oder mehren) Anpassungsbauteil einen modifizierten Modulblock zielgerichtet zu erstellen, der hinsichtlich seiner Aufnahmefunktion einem vorgefertigten Modulblock mit unterschiedlichen Aufnahmen für Kontakte unterschiedlicher Art gleichkommt, ohne dass die Nachteile des Vorhaltens verschiedener solcher Modulblöcke und deren mangelnde Flexibilität auftreten würden.

In einer vorteilhaften Ausgestaltung eines Aspekts der Erfindung ist der Kontakt der ersten Art ein pneumatischer Kontakt, wobei insbesondere dann der Kontakt der zweiten Art ein elektrischer und/oder ein optischer Kontakt sein kann. Elektrische, optische und pneumatische Kontakte sind Kontaktarten, die in besonders günstiger Weise im Rahmen der Erfindung miteinander kombiniert werden können.

In einer anderen vorteilhaften Ausgestaltung eines Aspekts der Erfindung ist der Kontakt der ersten Art ein elektrischer Kontakt, der sich von einem beispielsweise ebenfalls elektrischen Kontakt der zweiten Art vor allem dadurch unterscheidet, dass dieser elektrische Kontakt der ersten Art für eine Übertragung im Vergleich zum Kontakt der zweiten Art (u.U. wesentlich) größerer elektrischer Leistung dienen soll und insofern einen größeren Querschnitt aufweist. Im Rahmen einer solchen Ausgestaltung können insbesondere größere Ströme zusammen mit Signalen (geringer Leistung) in einem Modulblock übertragen werden.

In einer anderen vorteilhaften Ausgestaltung eines Aspekts der Erfindung ist das Anpassungsbauteil eine Hülse mit einer Innenkontur und einer Außenkontur, wobei die Innenkontur zur Fixierung des Kontakts der zweiten Art in dem Anpassungsbauteil ausgestaltet ist und die Außenkontur für eine Fixierung des Anpassungsbauteils in einer Kontaktaufnahme des Modulblocks ausgestaltet ist. Der Begriff "Hülse" ist hierbei allerdings nicht eingeschränkt auf einen Zylinder oder ein im wesentlichen zylindrisches Element zu verstehen und bezieht sich darauf, dass das Anpassungsbauteil eine jeweils angepasste Innenkontur und Außenkontur aufweist, wobei sowohl die Innenkontur als auch die Au-ßenkontur mit Ausnehmungen, Aussparungen, Schlitzen, Löchern und ähnlichem versehen sein können. Das Anpassungsbauteil in Form der Hülse erlaubt, dass sich der Kontakt der zweiten Art zumindest teilweise durch das Anpassungsbauteil hindurch erstreckt bzw. in dem Anpassungsbauteil aufgenommen ist, so dass eine Kontaktierung mit einem Gegenkontakt des Gegensteckers für den Kontakt direkt möglich ist.

In einer zur obigen Ausgestaltung alternativen vorteilhaften Ausgestaltung eines Aspekts der Erfindung ist das Anpassungsbauteil für eine Kontaktierung mit dem Kontakt der zweiten Art und eine Kontaktierung mit einem Gegensteckverbinder des modularen Steckverbinders ausgestaltet ist. Anders als bei der Ausgestaltung des Anpassungsbauteils als Hülse ist das Anpassungsbauteil in dieser Ausgestaltung selbst Teil der (Durch-) Kontaktierung, wobei das Anpassungsbauteil selbst einen Kontakt zwischen dem Kontakt der zweiten Art und dem Gegensteckverbinder herstellt. Beispielsweise kann das Anpassungsbauteil einen elektrisch leitfähigen Abschnitt aufweisen, der im Einbauzustand sowohl mit dem dann elektrischen Kontakt (der zweiten Art) und dem Gegensteckverbinder leitend in Berührung ist.

In einer weiteren vorteilhaften Ausgestaltung eines Aspekts der Erfindung ist das Anpassungsbauteil für eine lösbare Fixierung des Anpassungsbauteils in einer Kontaktaufnahme des Modulblocks ausgestaltet. Auch wenn die Erfindung ebenfalls umfasst, dass ein einmal in eine Kontaktaufnahme des Modulblocks eingebrachtes Kontaktelement etwa durch ein Verrasten oder Verklinken nicht mehr bzw. nicht mehr ohne Zerstörung von Modulblock oder Anpassungsbauteil entfernt werden kann, ist es vorteilhaft, eine lösbare Fixierung vorzusehen. Wird etwa bei einer Montage ein Anpassungsbauteil irrtümlich in die falsche Kontaktaufnahme eingesetzt, kann dies auf einfache Weise korrigiert werden.

In einer bevorzugten Variante der obigen Ausgestaltung umfasst ein Lösen der Fixierung des Anpassungsbauteils aus der Kontaktaufnahme eine Verformung des Anpassungsbauteils, die durch einen in dem Anpassungsbauteil aufgenommenen Kontakt der zweiten Art gesperrt wird. Das lösbare Fixieren des Anpassungsbauteils kann beispielsweise dadurch erreicht werden, dass eine oder mehrere elastisch verformbare Zungen oder ähnliche Abschnitte des Anpassungsbauteils einen Formschluss mit dem Modulblock eingehen, wobei der Formschluss durch eine Verformung der Zunge(n) oder ähnlichen Abschnitte aufgehoben werden kann. Ist ein zweiter Kontakt in dem Anpassungsbauteil aufgenommen, verhindert der Kontakt durch seine Anwesenheit die Verformung, so dass der Formschluss beibehalten bleibt und somit das Anpassungsbauteil fixiert bleibt.

Die Erfindung sieht zudem einen modularen Steckverbinder mit einem erfindungsgemäßen Modulsystem, einem Kontakt der ersten Art und einem Kontakt der zweiten Art vor, wobei der Kontakt der ersten Art in einer Kontaktaufnahme des Modulblocks aufgenommen ist, wobei das Anpassungsbauteil in einer weiteren Kontaktaufnahme des Modulblocks aufgenommen ist und wobei der Kontakt der zweiten Art in dem Anpassungsbauteil aufgenommen ist.

Ferner sieht die Erfindung ein Verfahren zur Herstellung einer Kontaktierung vor, nämlich mit den Schritten eines Bereitstellen eines ersten und eines zweiten modularen Steckverbinders jeweils mit den Schritten des erfindungsgemäßen Verfahrens zur Bereitstellung eines modularen Steckverbinders und einem Verbinden des ersten und zweiten Steckverbinders unter Kontaktieren jeweils der Kontakte der ersten Art und der Kontakte der zweiten Art miteinander.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine perspektivische Darstellung eines Modulblocks mit einem Kontakt erster Art und einem Kontakt zweiter Art,
- Fig. 2: eine Aufsicht auf den Modulblock aus Fig. 1 entlang einer Steckrichtung der Kontakte,
- Fig. 3: eine perspektivische Explosionsansicht eines Ausführungsbeispiels eines erfindungsgemäßen Modulsystems mit einem Kontakt zweiter Art,
- Fig. 4: eine teilweise perspektivische Schnittansicht des Modulsystems aus Fig. 3 mit dem Kontakt zweiter Art, der in das Anpassungsbauteil eingebracht ist,
- Fig. 5: eine teilweise perspektivische Schnittansicht des Modulsystems aus Fig. 3 und Fig. 4, wobei das Anpassungsbauteil mit dem Kontakt zweiter Art in den Modulblock eingebracht ist,
- Fig. 6: eine teilweise perspektivische Schnittansicht einer Steckkombination von zwei Modulsystemen nach dem Ausführungsbeispiel der Erfindung mit eingebrachten Anpassungsbauteilen und Kontakten erster und zweiter Art und
- Fig. 7: ein schematisches Ablaufdiagramm eines Ausführungsbeispiels des erfindungsgemäßen Verfahrens zur Herstellung einer gemischten Kontaktierung.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Darstellungen zu finden sind.

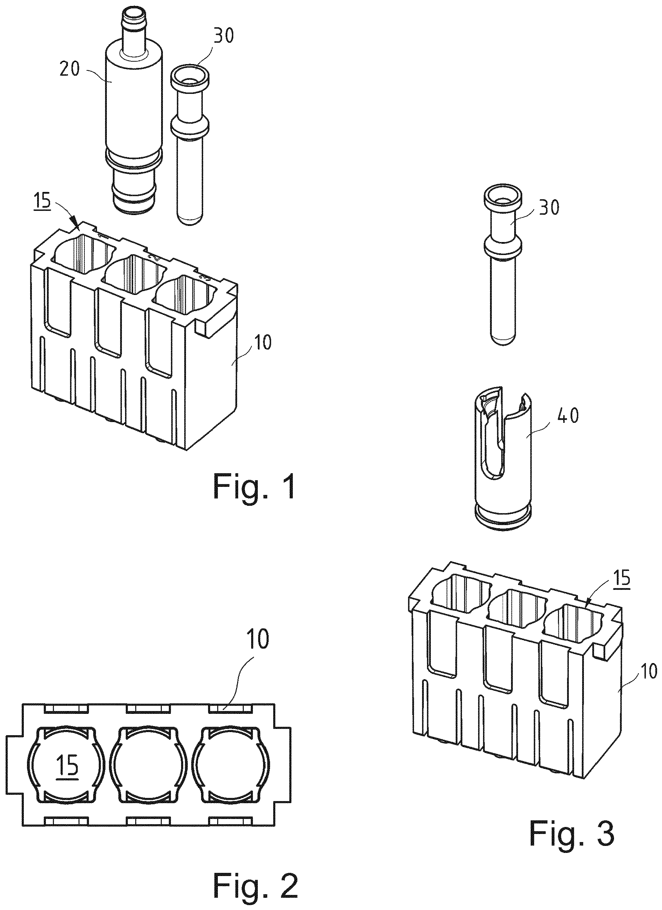

Fig. 1 zeigt eine perspektivische Darstellung eines Modulblocks 10 mit einem Kontakt 20 erster Art und einem Kontakt 30 zweiter Art.

Der Modulblock 10, der als solches bekannt ist, weist in diesem Fall drei Kontaktaufnahmen 15 auf, die jeweils für eine Aufnahme eines Kontakts 20 der ersten Art vorgesehen sind. In diesem konkreten Fall ist der Kontakt 20 erster Art ein pneumatischer Kontakt, der in seinem Querschnitt größer ist als ein Kontakt 30 der zweiten Art, der in diesem Fall ein elektrischer Kontakt ist.

Da der elektrische Kontakt 30 in seinem Querschnitt kleiner ist als der pneumatische Kontakt 20, kann der elektrische Kontakt 30 nicht in sicherer Weise in dem Modulblock 10 aufgenommen werden.

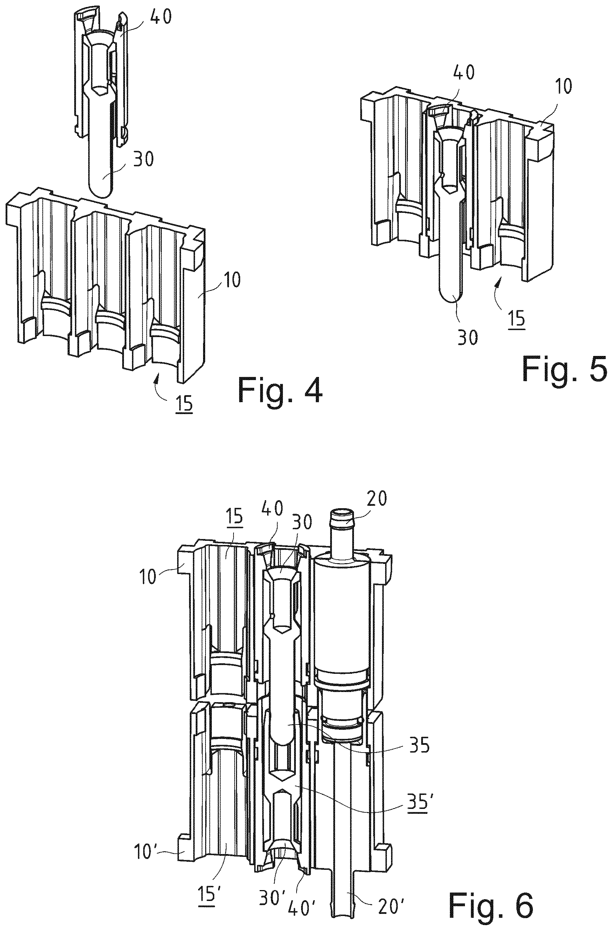

Fig. 2 zeigt eine Aufsicht auf dem Modulblock 10 aus Fig. 1 entlang einer Steckrichtung der Kontakte 20, 30. Wie anhand der Fig. 2 zu erkennen ist, erstreckt sich die jeweilige Kontaktaufnahme 15 durch den kompletten Modulblock 10 hindurch, so dass auf der gegenüberliegenden Seite (unten in der Darstellung von Fig. 1) ein in dem Modulblock 10 eingebrachter Kontakt mit einem Kontakt eines gegenüberliegenden Modulblocks kontaktiert werden kann (siehe Fig. 6).

Fig. 3 zeigt eine perspektivische Explosionsansicht eines Ausführungsbeispiels eines erfindungsgemäßen Modulsystems mit einem Kontakt 30 zweiter Art.

Das Modulsystem umfasst den Modulblock 10, der bereits mit Bezug auf die Figuren 1 und 2 beschrieben wurde, wobei zudem ein Anpassungsbauteil 40 vorgesehen ist, das in Hülsenform ausgestaltet ist, derart, dass es eine sichere Aufnahme des Anpassungsbauteils 40 in einer Kontaktaufnahme 15 des Modulblocks 10 ermöglicht, wobei wiederum das Anpassungsbauteil 40 im Innenbereich der Hülle für eine Aufnahme des Kontakts 30 der zweiten Art vorgesehen ist.

Fig. 4 zeigt eine teilweise perspektivische Schnittansicht des Modulsystems aus Fig. 3 mit dem Kontakt 30 erster Art, der in das Anpassungsbauteil 40 eingebracht ist.

Fig. 5 zeigt eine teilweise perspektivische Schnittansicht des Modulsystems aus Fig. 3 und Fig. 4, wobei das Anpassungsbauteil 40 mit dem Kontakt 30 zweiter Art in dem Modulblock 10 eingebracht ist.

Das Anpassungsbauteil 40 befindet sich in einer Kontaktaufnahme 15 des Modulblocks 10, wobei die Kontaktaufnahme 15 in bekannter Weise mit einer räumlichen Ausgestaltung versehen ist, die eine sichere Aufnahme eines Kontakts der ersten Art (siehe Fig. 1 oder Fig. 6) erlaubt. Die Außenform des Anpassungsbauteils 40 ist hierbei so gestaltet, dass sie mit der räumlichen Ausgestaltung der Kontaktaufnahme 15 zu einer sicheren Aufnahme des Anpassungsbauteils 40 im Modulblock 10 zusammenarbeitet.

Auch der Kontakt 30 zweiter Art weist eine räumliche Ausgestaltung auf, die andernfalls für eine Aufnahme des Kontakts 30 der zweiten Art in einer entsprechenden Kontaktaufnahme eines anderen Modulblocks vorgesehen ist, der auf den Kontakt der zweiten Art eingerichtet ist. Im vorliegenden Fall wirkt die Form des Kontakts 30 der zweiten Art mit einer Innenkontur des Anpassungsbauteils 40 zu einer Fixierung des Kontakts 30 der zweiten Art innerhalb des Anpassungsbauteils 40 zusammen.

Fig. 6 zeigt eine teilweise perspektivische Schnittansicht einer Steckkombination von zwei Modulsystemen nach dem Ausführungsbeispiel der Erfindung mit eingebrachten Anpassungsbauteilen 40, 40' und Kontakten 20, 20', 30, 30' erster und zweiter Art.

Ergänzend zu der Darstellung in Fig. 5, ist in der Darstellung von Fig. 6 das neben dem Anpassungsbauteil 40, das mit einem darin aufgenommenen Kontakt 30 zweiter Art in der mittigen Kontaktaufnahme 15 des Modulblocks 10 vorgesehen ist, in einer der äußeren Kontaktaufnahmen 15 ein Kontakt 20 zweiter Art (hier nicht im Schnitt dargestellt) aufgenommen.

In der in der Darstellung rechten Kontaktaufnahme 15 des Modulblocks 10 ist in der Darstellung von Fig. 6 ein pneumatischer Stiftkontakt 20 aufgenommen. Der Kontakt 30 der zweiten Art, der in dem Anpassungsbauteil 40 aufgenommen ist, ist ein elektrischer Stiftkontakt mit einem Stiftabschnitt 35 an seinem vorderen Ende (in der Darstellung von Fig. 6 an seinem unteren Ende).

Entsprechend ist der Modulblock 10' mit einem pneumatischen Buchsenkontakt 20' in seiner rechten Kontaktaufnahme 15' und einem Anpassungsbauteil 40' mit einem darin aufgenommenen elektrischen Buchsenkontakt 30' in der mittleren Kontaktaufnahme 15' versehen. Der elektrische Buchsenkontakt 30' weist an seiner vorderen Seite (oben in Fig. 6) eine Ausnehmung oder einen Buchsenabschnitt 35' auf, in dem sich der Stiftabschnitt 35 des elektrischen Stiftkontakts 30 erstreckt, so dass die elektrischen Kontakte miteinander verbunden sind. Der pneumatische Stiftkontakt 20 und der pneumatische Buchsenkontakt 20' sind ebenfalls in bekannter Weise miteinander verbunden.

In der Darstellung von Fig. 6 ist zu erkennen, dass sich das Anpassungsbauteil 40 und das Anpassungsbauteil 40' beispielsweise in Ihrer Länge unterscheiden, wobei erfindungsgemäß durchaus auch identische Anpassungsbauteile für beide Seiten der Kontaktierung genutzt werden können.

Der Übersichtlichkeit halber sind in der Darstellung von Fig. 6 keine weiteren Modulblöcke und auch keine weiteren Elemente der modularen Steckverbinder dargestellt.

In dem hier diskutierten Ausführungsbeispiel ist der Kontakt der ersten Art ein pneumatischer Kontakt, während als Beispiel des Kontakts der zweiten Art ein elektrischer Kontakt angenommen ist. Die Erfindung ist jedoch nicht hierauf beschränkt und es können im Grunde alle Kontakt- bzw. Übertragungsarten (insbesondere pneumatisch, fluidisch, elektrisch oder optisch) jeweils bei einem Kontakt der ersten Art und einem Kontakt der zweiten Art Einsatz finden. So kann können auch beispielsweise beide Kontakt, der Kontakt der ersten Art und der Kontakt der zweiten Art, jeweils ein elektrischer Kontakt sein, wobei sich der elektrische Kontakt der ersten Art hierbei insbesondere dadurch vom elektrischen Kontakt der zweiten Art unterscheidet, dass sein Querschnitt größer ist und der elektrische Kontakt der ersten Art insofern etwa im Vergleich zum elektrischen Kontakt der zweiten Art größere Ströme bzw. Leistungen übertragen kann.

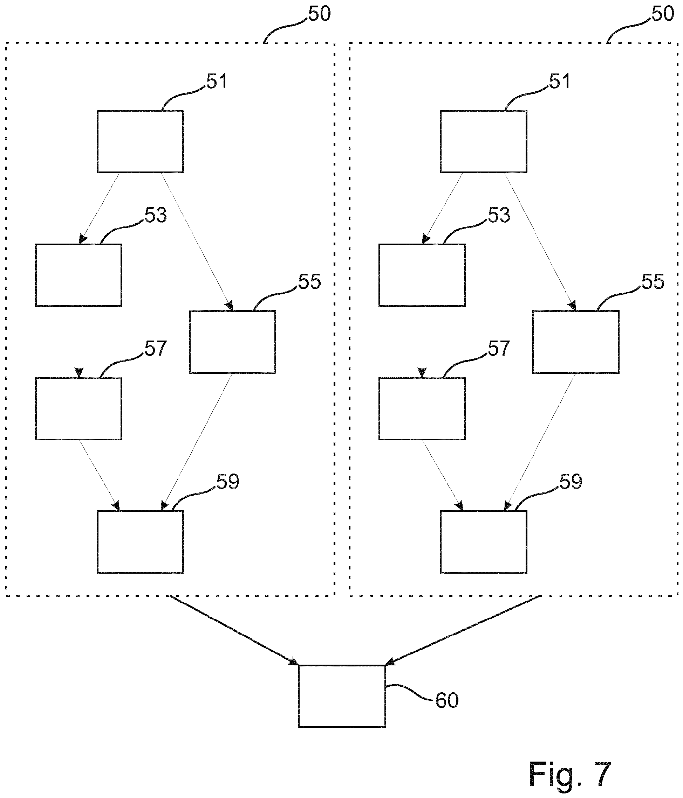

Fig. 7 zeigt ein schematisches Ablaufdiagramm eines Ausführungsbeispiels des erfindungsgemäßen Verfahrens zur Herstellung einer gemischten Kontaktierung.

Das Verfahren umfasst parallel zueinander ein Bereitstellen 50 eines ersten modularen Steckverbinders und ein Bereitstellen 50' eines zweiten modularen Steckverbinders, wobei die jeweiligen Teilschritte des Bereitstellens 50, 50' einander entsprechen.

In einem ersten Schritt 51 wird ein Modulblock vorgesehen, wobei der Modulblock mehrere Kontaktaufnahmen aufweist, von denen jede einzelne für eine Aufnahme eines Kontakts einer ersten Art bzw. eines Anpassungsbauteils vorgesehen ist. In einem folgenden Einbringschritt 53 wird ein Kontakt der zweiten Art in das Anpassungsbauteil eingebracht. Parallel dazu wird in einem weiteren Einbringschritt 55 ein Kontakt der ersten Art in eine der Kontaktaufnahmen des Modulblocks eingebracht. Folgend auf das Einbringen 53 des Kontakts der zweiten Art in das Anpassungsbauteil wird das Anpassungsbauteil (bzw. die Kombination von Anpassungsbauteil und Kontakt zweiter Art) in eine weitere der Kontaktaufnahmen des Modulblocks eingebracht (Schritt 57), wobei sich der Kontakt der zweiten Art im Wesentlichen durch seinen kleineren Querschnitt von einem Kontakt der ersten Art unterscheidet.

Abweichend von der hier dargestellten Reihenfolge kann auch der Kontakt der zweiten Art in das Anpassungsbauteil eingebracht werden, nachdem das Anpassungsbauteil (noch ohne den Kontakt zweiter Art) in eine der Kontaktaufnahmen des Modulblocks eingebracht wurde.

Nachdem der Modulblock somit mit wenigstens einem Kontakt der ersten Art und einem Kontakt der zweiten Art versehen ist, wird der Modulblock in einem weiteren Einbringschritt 59 in den modularen Steckverbinder eingebracht.

Auch hier wiederum besteht, sofern dies baulich möglich ist, keine Notwendigkeit im Rahmen der Erfindung dafür, die genaue Reihenfolge dieser Schritte einzuhalten, da unter Umständen der Modulblock zunächst in den Steckverbinder eingebracht werden kann, und erst danach mit den Kontakten versehen wird.

Folgend auf das Bereitstellen des ersten und zweiten modularen Steckverbindern in den Schritten 50 und 50' werden die Steckverbinder unter Kontaktieren jeweils der Kontakte der ersten Art und der Kontakte der zweiten Art miteinander in Schritt 60 verbunden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind.

### Bezuaszeichenliste

- 10, 10': Modulblock
- 15, 15': Aufnahme eines Modulblocks
- 20: pneumatischer Stiftkontakt (Kontakt erster Art)
- 20': pneumatischer Buchsenkontakt (Kontakt erster Art)
- 30: elektrischer Stiftkontakt (Kontakt zweiter Art)
- 30': elektrischer Buchsenkontakt (Kontakt zweiter Art)
- 35: Stiftabschnitt eines elektrischen Stiftkontakts
- 35': Buchsenabschnitt eines elektrischen Kontakts
- 40,40': Anpassungsbauteil
- 50, 50': Bereitstellen eines modularen Steckverbinders
- 51: Vorsehen eines Modulblocks
- 53: Einbringen eines Kontakts einer zweiten Art
- 55: Einbringen eines Kontakts einer ersten Art
- 57: Einbringen eines Anpassungsbauteils
- 59: Einbringen eines Modulblocks in einen modularen Steckverbinder
- 60: Verbinden von zwei modularen Steckverbindern

## Patentansprüche

1. Modulsystem für einen modularen Steckverbinder, mit:
einem Modulblock (10, 10') zur Aufnahme in dem modularen Steckverbinder, wobei der Modulblock (10, 10') mit mehreren Kontaktaufnahmen (15, 15') ausgestaltet ist, die jeweils für eine Aufnahme eines Kontakts (20, 20') einer ersten Art vorgesehen sind, und
einem Anpassungsbauteil (40, 40'), das dazu ausgestaltet ist, in einer genannten Kontaktaufnahme (15, 15') des Modulblocks (10, 10') aufgenommen zu werden,
wobei das Anpassungsbauteil (40, 40') für eine Aufnahme eines Kontakts (30, 30') einer zweiten Art vorgesehen ist,
wobei der Kontakt (30, 30') der zweiten Art einen kleineren Querschnitt als der Kontakt (20, 20') der ersten Art aufweist.

2. Modulsystem nach Anspruch 1,
wobei das Anpassungsbauteil (40, 40') eine Hülse mit einer Innenkontur und einer Außenkontur ist, wobei die Innenkontur zur Fixierung des Kontakts (30, 30') der zweiten Art in dem Anpassungsbauteil (40, 40') ausgestaltet ist und die Außenkontur für eine Fixierung des Anpassungsbauteils (40, 40') in einer Kontaktaufnahme (15, 15') des Modulblocks (10, 10') ausgestaltet ist.

3. Modulsystem nach einem der Ansprüche 1 oder 2,
wobei das Anpassungsbauteil für eine Kontaktierung mit dem Kontakt (30, 30') der zweiten Art und eine Kontaktierung mit einem Gegensteckverbinder des modularen Steckverbinders ausgestaltet ist.

4. Modulsystem nach einem der vorstehenden Ansprüche,
wobei das Anpassungsbauteil (40, 40') für eine lösbare Fixierung des Anpassungsbauteils (40, 40') in einer Kontaktaufnahme des Modulblocks ausgestaltet ist.

5. Modulsystem nach Anspruch 3,
wobei ein Lösen der Fixierung des Anpassungsbauteils (40, 40') aus der Kontaktaufnahme (15, 15') eine Verformung des Anpassungsbauteils umfasst, die durch einen in dem Anpassungsbauteil (40, 40') aufgenommenen Kontakt (30, 30') der zweiten Art gesperrt wird.

6. System umfassend ein Anpassungsbauteil (40, 40'), einen Kontakt (20, 20') einer ersten Art und einen Kontakt (30, 30') einer zweiten Art, wobei das Anpassungsbauteil (40, 40'), der Kontakt (20, 20') der ersten Art und der Kontakt (30, 30') der zweiten Art für ein Modulsystem für einen modularen Steckverbinder vorgesehen sind,
wobei das Anpassungsbauteil (40, 40') dazu ausgestaltet ist, in einer Kontaktaufnahme (15, 15') eines Modulblocks (10, 10') des Modulsystems aufgenommen zu werden, die für eine Aufnahme des Kontakts (20, 20') der ersten Art vorgesehen ist,
wobei das Anpassungsbauteil (40, 40') ferner für eine Aufnahme des Kontakts (30, 30') der zweiten Art vorgesehen ist und
wobei der Kontakt der zweiten Art einen kleineren Querschnitt als der Kontakt (20, 20') der ersten Art aufweist.

7. Modularer Steckverbinder mit einem Modulsystem nach einem der Ansprüche 1 bis 5, einem Kontakt (20, 20') der ersten Art und einem Kontakt (30, 30') der zweiten Art,
wobei der Kontakt (20, 20') der ersten Art in einer Kontaktaufnahme (15, 15') des Modulblocks (10, 10') aufgenommen ist,
wobei das Anpassungsbauteil (40, 40') in einer weiteren Kontaktaufnahme (15, 15') des Modulblocks (10, 10') aufgenommen ist und
wobei der Kontakt (30, 30') der zweiten Art in dem Anpassungsbauteil (40, 40') aufgenommen ist.

8. Verfahren (50, 50') zur Bereitstellung eines modularen Steckverbinders nach Anspruch 7, mit den Schritten:
Vorsehen (51) des Modulblocks (10, 10'), wobei der Modulblock (10, 10') mit mehreren Kontaktaufnahmen (15, 15') ausgestaltet ist, die jeweils für eine Aufnahme eines Kontakts einer ersten Art vorgesehen sind,
Einbringen (55) des Kontakts (20, 20') der ersten Art in eine der Kontaktaufnahmen (15, 15') des Modulblocks (10, 10'),
Einbringen (53) des Kontakts (30, 30') einer zweiten Art in das Anpassungsbauteil (40, 40'), wobei der Kontakt (30, 30') der zweiten Art einen kleineren Querschnitt als der Kontakt (20, 20') der ersten Art aufweist,
Einbringen (57) des Anpassungsbauteils (40, 40') in eine weitere der Kontaktaufnahmen (15; 15') des Modulblocks (10, 10') und
Einbringen (59) des Modulblocks (10, 10') in den modularen Steckverbinder.

9. Verfahren zur Herstellung einer Kontaktierung, mit den Schritten:
Bereitstellen (50, 50') eines ersten und eines zweiten modularen Steckverbinders jeweils mit den Schritten des Verfahrens nach Anspruch 8 und
Verbinden (60) des ersten und zweiten Steckverbinders unter Kontaktieren jeweils der Kontakte (20, 20') der ersten Art und der Kontakte (30, 30') der zweiten Art miteinander.

## Claims

1. A module system for a modular plug connector, comprising:
a module block (10, 10') to be received in the modular plug connector, wherein the module block (10, 10') ') is designed with a plurality of contact receptacles (15, 15') which are each provided to receive a contact (20, 20') of a first type, and
an adaptation component (40, 40') which is designed to be received in one said contact receptacle (15, 15') of the module block (10, 10'),
wherein the adaptation component (40, 40') is provided to receive a contact (30, 30') of a second type,
wherein the contact (30, 30') of the second type has a smaller cross-section than the contact (20, 20') of the first type.

2. The module system according claim 1,
wherein the adaptation component (40, 40') is a sleeve having an inner contour and an outer contour, wherein the inner contour is designed to fixate the contact (30, 30') of the second type in the adaptation component (40, 40') and the outer contact is designed to fixate the adaptation component (40, 40') in a contact receptacle (15, 15') of the module block (10, 10').

3. The module system according to any one of claims 1 to 2,
wherein the adaptation component is designed for contacting the contact (30, 30') of the second type and for contacting a mating connector of the modular plug connector.

4. The module system according to any one of the preceding claims,
wherein the adaptation component (40, 40') is designed for releasably fixating the adaptation component (40, 40') in a contact receptacle of the module block.

5. The module system according to claim 3,
wherein releasing the fixated adaptation component (40, 40') from the contact receptacle (15, 15') includes deforming the adaptation component, which is blocked by a contact (30, 30') of the second type which has been received in the adaptation component (40, 40').

6. System comprising an adaptation component (40, 40'), a contact (20, 20') of a first type and contact (30, 30') of a second type, wherein the adaptation component (40, 40'), the contact (20, 20') of the first type and the contact (30, 30') of the second type are provided for a module system for a modular plug connector,
wherein the adaptation component (40, 40') is designed to be received in a contact receptacle (15, 15') of a module block (10, 10') of the module system, which is provided to receive the contact (20, 20') of the first type,
wherein the adaptation component (40, 40') is also provided to receive the contact (30, 30') of the second type and
wherein the contact of the second type has a smaller cross-section than the contact (20, 20') of the first type.

7. A modular plug connector comprising the module system according to any one of claims 1 to 5, a contact (20, 20') of the first type and a contact (30, 30') of the second type,
wherein the contact (20, 20') of the first type is received in a contact receptacle (15, 15') of the module block (10, 10'),
wherein the adaptation component (40, 40') is received in another contact receptacle (15, 15') of the module block (10, 10'), and
wherein the contact (30, 30') of the second type is received in the adaptation component (40, 40').

8. A method (50, 50') of preparing a modular plug connector according to claim 7, comprising the steps of:
providing (51) the module block (10, 10'), wherein the module block (10, 10') is designed with a plurality of contact receptacles (15, 15') each of which is provided to receive a contact of a first type,
inserting (55) the contact (20, 20') of the first type into one of the contact receptacles (15, 15') of the module block (10, 10'),
inserting (53) the contact (30, 30') of a second type into the adaptation component (40, 40'), wherein the contact (30, 30') of the second type has a smaller cross-section than the contact (20, 20') of the first type,
inserting (57) the adaptation component (40, 40') into another one of the contact receptacles (15; 15') of the module block (10, 10') and
inserting (59) the module block (10, 10') into the modular plug connector.

9. A method of producing contact, comprising the steps of:
preparing (50, 50') a first and a second modular plug connector, in each case according to the method according to claim 8 and
connecting (60) the first and second plug connectors with respective contacting of the contacts (20, 20') of the first type with each other and the contacts (30, 30') of the second type with each other.

## Revendications

1. Système de modules pour un connecteur enfichable modulaire, avec :
un bloc de modules (10, 10') destiné à être logé dans le connecteur enfichable modulaire, dans lequel le bloc de modules (10, 10') est configuré avec plusieurs logements de contact (15, 15') qui sont prévus respectivement pour un logement d'un contact (20, 20') d'un premier type, et
un composant d'adaptation (40, 40') qui est configuré pour être logé dans un logement de contact (15, 15') évoqué du bloc de modules (10, 10'),
dans lequel le composant d'adaptation (40, 40') est prévu pour un logement d'un contact (30, 30') d'un deuxième type,
dans lequel le contact (30, 30') du deuxième type présente une section transversale plus petite que le contact (20, 20') du premier type.

2. Système de modules selon la revendication 1,
dans lequel le composant d'adaptation (40, 40') est une douille avec un contour intérieur et un contour extérieur, dans lequel le contour intérieur est configuré pour fixer le contact (30, 30') du deuxième type dans le composant d'adaptation (40, 40') et le contour extérieur est configuré pour fixer le composant d'adaptation (40, 40') dans un logement de contact (15, 15') du bloc de modules (10, 10').

3. Système de modules selon l'une quelconque des revendications 1 ou 2,
dans lequel le composant d'adaptation est configuré pour établir un contact avec le contact (30, 30') du deuxième type et pour établir un contact avec un connecteur enfichable antagoniste du connecteur enfichable modulaire.

4. Système de modules selon l'une quelconque des revendications précédentes,
dans lequel le composant d'adaptation (40, 40') est configuré pour une fixation amovible du composant d'adaptation (40, 40') dans un logement de contact du bloc de modules.

5. Système de modules selon la revendication 3,
dans lequel un détachement de la fixation du composant d'adaptation (40, 40') hors du logement de contact (15, 15') comprend une déformation du composant d'adaptation, qui est bloquée par un contact (30, 30'), logé dans le composant d'adaptation (40, 40'), du deuxième type.

6. Système comprenant un composant d'adaptation (40, 40'), un contact (20, 20') d'un premier type et un contact (30, 30') d'un deuxième type, dans lequel le composant d'adaptation (40, 40'), le contact (20, 20') du premier type et le contact (30, 30') du deuxième type sont prévus pour un système de modules pour un connecteur enfichable modulaire,
dans lequel le composant d'adaptation (40, 40') est configuré pour être logé dans un logement de contact (15, 15') d'un bloc de modules (10, 10') du système de modules, qui est prévu pour un logement du contact (20, 20') du premier type,
dans lequel le composant d'adaptation (40, 40') est prévu en outre pour un logement du contact (30, 30') du deuxième type, et
dans lequel le contact du deuxième type présente une section transversale plus petite que le contact (20, 20') du premier type.

7. Connecteur enfichable modulaire avec un système de modules selon l'une quelconque des revendications 1 à 5, un contact (20, 20') du premier type et un contact (30, 30') du deuxième type,
dans lequel le contact (20, 20') du premier type est logé dans un logement de contact (15, 15') du bloc de modules (10, 10'),
dans lequel le composant d'adaptation (40, 40') est logé dans un autre logement de contact (15, 15') du bloc de modules (10, 10'), et
dans lequel le contact (30, 30') du deuxième type est logé dans le composant d'adaptation (40, 40').

8. Procédé (50, 50') pour fournir un connecteur enfichable modulaire selon la revendication 7, avec les étapes :
de prévision (51) du bloc de modules (10, 10'), dans lequel le bloc de modules (10, 10') est configuré avec plusieurs logements de contact (15, 15'), qui sont prévus respectivement pour un logement d'un contact d'un premier type,
d'introduction (55) du contact (20, 20') du premier type dans un des logements de contact (15, 15') du bloc de modules (10, 10'),
d'introduction (53) du contact (30, 30') d'un deuxième type dans le composant d'adaptation (40, 40'), dans lequel le contact (30, 30') du deuxième type présente une section transversale plus petite que le contact (20, 20') du premier type,
d'introduction (57) du composant d'adaptation (40, 40') dans un autre des logements de contact (15 ; 15') du bloc de modules (10, 10'), et
d'introduction (59) du bloc de modules (10, 10') dans le connecteur enfichable modulaire.

9. Procédé pour établir un contact, avec les étapes :
de fourniture (50, 50') d'un premier et d'un deuxième connecteur enfichable modulaire respectivement avec les étapes du procédé selon la revendication 8 et
de liaison (60) du premier et du deuxième connecteur enfichable moyennant la mise en contact respectivement des contacts (20, 20') du premier type et des contacts (30, 30') du deuxième type les uns avec les autres.
